# Europäisches Patentamt
# European Patent Office
# Office européen des brevets

(19)

(11) Veröffentlichungsnummer: **0 095 543**
**B1**

(12)

# EUROPÄISCHE PATENTSCHRIFT

(45) Veröffentlichungstag der Patentschrift:
**25.09.85**

(51) Int. Cl.⁴: **H 04 N 9/64**

(21) Anmeldenummer: **82710033.0**

(22) Anmeldetag: **27.05.82**

(54) Integrierte digitale Chrominanzkanal-Schaltung mit Verstärkungsregelung.

(43) Veröffentlichungstag der Anmeldung:
**07.12.83 Patentblatt 83/49**

(45) Bekanntmachung des Hinweises auf die Patenterteilung:
**25.09.85 Patentblatt 85/39**

(84) Benannte Vertragsstaaten:
**DE FR GB IT NL**

(56) Entgegenhaltungen:
**EP - A - 0 051 075**

(73) Patentinhaber: **Deutsche ITT Industries GmbH, Hans-Bunte-Strasse 19 Postfach 840, D-7800 Freiburg (DE)**

(84) Benannte Vertragsstaaten: **DE**

(73) Patentinhaber: **ITT INDUSTRIES INC., 320 Park Avenue, New York, NY 10022 (US)**

(84) Benannte Vertragsstaaten: **FR GB IT NL**

(72) Erfinder: **Flamm, Peter Michael, Dipl. Ing., Stefan-Meier-Strasse 167, D-7800 Freiburg (DE)**
Erfinder: **Mlynek, Daniel, Dr. Ing., 7, Rue des Jardins, F-68600 Wolfgantzen (FR)**
Erfinder: **Schmidtpott, Friedrich, Gewerbestrasse 13, D-7803 Gundelfingen (DE)**
Erfinder: **Praxmarer, Alfred, Am See 6, D-7803 Gundelfingen (DE)**

(74) Vertreter: **Stutzer, Gerhard, Dr. et al, Deutsche ITT Industries GmbH Patent- und Lizenzabteilung Hans-Bunte-Strasse 19 Postfach 840, D-7800 Freiburg (DE)**

ACTORUM AG

## Beschreibung

Die Erfindung betrifft eine integrierte digitale Chrominanzkanal-Schaltung mit Verstärkungsregelung für Farbfernsehempfänger mit mindestens einer integrierten Schaltung zur digitalen Verarbeitung des Farb-Bild-Austast-Synchronsignal-Gemisches (FBAS-Signals) mit den weiteren Merkmalen des Oberbegriffs des Anspruchs 1. Eine derartige Chrominanzkanal-Schaltung ist aus der veröffentlichten Patentanmeldung EP-A1-0051075 bekannt.

Bei der praktischen Erprobung in Farbfernsehempfängern mit digitaler Signalverarbeitung hat sich nun gezeigt, dass die bekannte Chrominanzkanal-Schaltung noch einige Nachteile aufweist. So ist beispielsweise die Messschaltung für die Burstamplitude noch nicht optimal, da bei der bekannten Anordnung der Fall eintreten kann, dass die Burst-Schwingungen in der Nähe der Nulldurchgänge oder in den Nulldurchgängen selbst abgetastet, also gemessen werden. Da diese Messwerte selbst klein und somit auch die daraus gebildeten digitalisierten Werte kleine Zahlen sind, ist der Messfehler gross.

Ein weiterer Nachteil der bekannten Anordnung besteht darin, dass der Sollwert für die Verstärkungsregelung dadurch vorgegeben ist, dass eine untere und eine obere Regelgrenze in Form entsprechender, in zwei Festwertspeicher eingegebener Zahlen vorliegen. Schliesslich wird die Integration des Stellsignals mittels zweier Zähler realisiert, so dass die Zeitkonstante dieses „Integriergliedes" nur vom Taktsignal der Zähler und deren Länge bestimmt ist.

Die in den Ansprüchen gekennzeichnete Erfindung beseitigt diese Nachteile, und es liegt ihr somit die Aufgabe zugrunde, die bekannte integrierte digitale Chrominanzkanal-Schaltung mit Verstärkungsregelung entsprechend dem Oberbegriff des Anspruchs 1 so zu verbessern, dass eine fehlerfreie Burstamplituden-Messung gewährleistet ist, ein einziger Sollwert für die Regelung vorgegeben werden kann und die Integrierung des Stellsignals optimaler vorgenommen wird. Ausserdem soll die Chrominanzkanal-Schaltung so modifiziert werden, dass der Regelkreis zu Messzwecken auftrennbar ist.

Zum Stand der Technik kann noch auf die Zeitschrift „Fernseh- und Kino-Technik", 1981, S. 317 bis 323, insbesondere Bild 9 auf S. 321, verwiesen werden. Die dortige digitale Chrominanzkanal-Schaltung arbeitet jedoch nach dem Prinzip der Vorwärtsregelung, während sowohl die Erfindung als auch der eingangs genannte Stand der Technik im Sinne einer Rückwärtsregelung arbeiten, so dass die Anordnung nach dieser Zeitschrift von der Erfindung weiter abliegt, zumal bei dieser bekannten Anordnung der Sollwert für die Regelung nur durch die vorgegebene konkrete Schaltung (Hardware) realisiert ist.

Die Erfindung wird nun anhand der Figuren der Zeichnung näher erläutert.

Fig. 1 zeigt in Form eines Blockschaltbildes den prinzipiellen Aufbau des erfindungsgemässen Chrominanzkanals,

Fig. 2 zeigt ebenfalls in Form eines Blockschaltbildes ein bevorzugtes Ausführungsbeispiel für die Burstamplituden-Messstufe und den digitalen Akkumulator, und

Fig. 3 zeigt das Blockschaltbild einer Weiterbildung der Erfindung mit der erwähnten Messmöglichkeit.

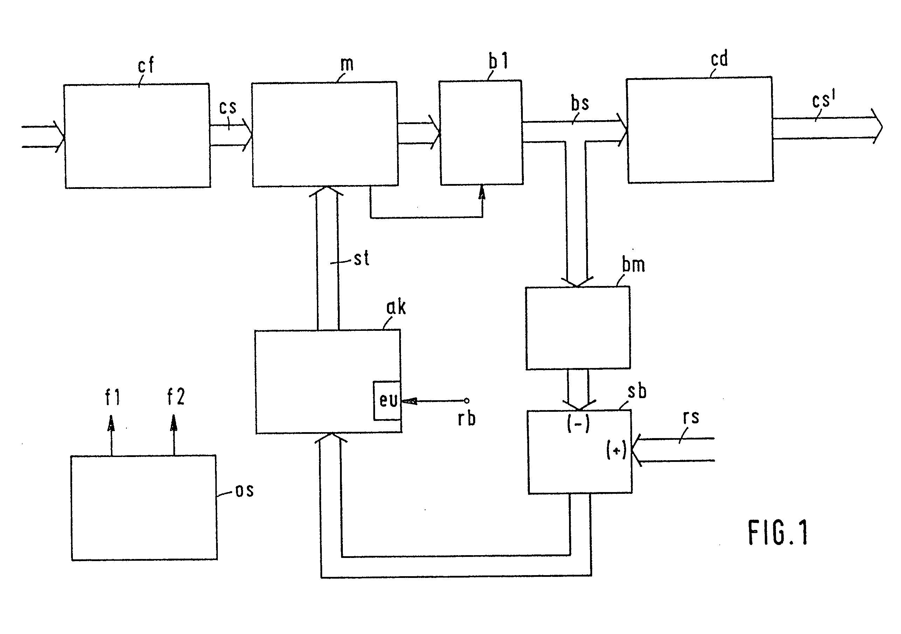

Im Blockschaltbild der Fig. 1 ist das digitale Chroma-Filter cf vorgesehen, das aus dem digitalisierten FBAS-Signal das digitale Chrominanzsignal cs erzeugt. Dieses ist dem ersten Eingang des Parallel-Multiplizierers m zugeführt, an dessen zweitem Eingang das digitale Stellsignal st der Verstärkungsregelung liegt. Der Ausgang des Parallel-Multiplizierers m liegt am Eingang des ersten Begrenzers b1, der Ausgangssignale des Parallel-Multiplizierers m, die grösser sind als der vorgegebene Begrenzungswert, auf diesen begrenzt. Dies kann schaltungstechnisch beispielsweise dadurch geschehen, dass mindestens eine höchstwertige Stelle des Ausgangssignals des Parallel-Multiplizierers m die Begrenzungswirkung des Begrenzers b1 auslöst, was durch die Verbindungsleitung zwischen diesen beiden Teilschaltungen in Fig. 1 veranschaulicht ist.

In den Figuren der Zeichnung sind die Verbindungsleitungen zwischen Signaleingängen und -ausgängen der einzelnen Teilschaltungen mittels bandförmiger Verbindungsleitungen (Busse) veranschaulicht, während die von üblichen diskreten Schaltungen her bekannten strichartigen Verbindungsleitungen für solche Verbindungen reserviert sind, über die nur einzelne Bits oder Takt-und/oder Störsignale weitergeleitet werden. Die bandförmigen Verbindungsleitungen verbinden also Paralleleingänge und Parallelausgänge miteinander, d. h. Ein-/Ausgänge, an denen gleichzeitig ein vollständiges Binärwort mit entsprechender Stellenzahl anliegt und zu einem bestimmten Zeitpunkt parallel vollständig in die entsprechende Teilschaltung übernommen bzw. von ihr erzeugt wird.

Das Ausgangssignal bs des ersten Begrenzers b1 ist dem Eingang der Burstamplituden-Messstube bm zugeführt, deren Ausgang am Subtrahend-Eingang (−) des Parallel-Subtrahierers sb liegt, während dessen Minuend-Eingang (+) das Referenzsignal rs der Regelung, also deren Sollwert, zugeführt ist. Der Ausgang des Parallel-Subtrahierers sb liegt am Eingang des digitalen Akkumulators ak, an dessen Ausgang das digitale Stellsignal st der Verstärkungsregelung entsteht, das, wie schon erwähnt, dem zweiten Eingang des Parallel-Multiplizierers m zugeführt ist. Am Übernahmeeingang eu des Akkumulators ak liegt ein aus der Rückflanke des Burst-Auftast-Signals (Key-Impuls) abgeleitetes Signal rb.

In Fig. 1 ist noch angedeutet, dass der Rechtecksignal-Taktgenerator als Farbhilfsträger-Quarzoszillator os (FHT- Oscillator) zur Erfindung gehört, der mindestens das erste Taktsignal f1 mit der vierfachen FHT-Frequenz und ein zweites Taktsignal f2 mit der FHT-Frequenz abgibt.

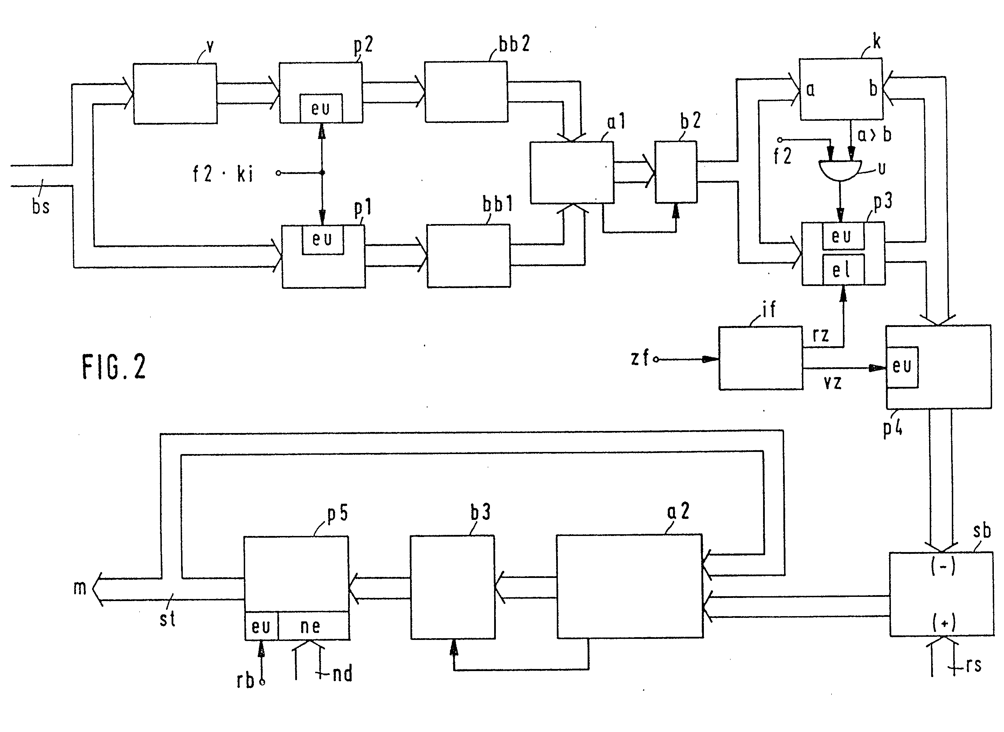

Die Fig. 2 zeigt das Blockschaltbild einer bevorzugten Ausführungsform der Erfindung, und zwar für die Burstamplituden-Messstufe bm nach Fig. 1 und für den digitalen Akkumulator ak nach Fig. 1. Die bevorzugte Ausbildung der Burstamplituden-Messstufe umfasst in Fig. 2 alle Teilschaltungen, die vor dem Subtrahend-Eingang ($-$) des Parallel-Subtrahierers sb angeordnet sind, während der Akkumulator ak aus den Schaltungsteilen besteht, die hinter dem Ausgang des Parallel-Subtrahierers sb liegen.

Das Ausgangssignal bs des ersten Begrenzers b1 nach Fig. 1 liegt in Fig. 2 am Eingang des ersten Pufferspeichers p1 und über das Verzögerungsglied v, dessen Verzögerungszeit gleich der Periodendauer des ersten Taktsignals f1 ist, also gleich einem Viertel oder 90 Grad der FHT-Frequenz, am Eingang des zweiten Pufferspeichers p2.

Dem jeweiligen Übernahmeeingang eu dieser beiden Pufferspeicher p1, p2 ist während des Burst-Auftast-Signals ki das zweite Taktsignal f2 zugeführt, was in Fig. 2 durch die logische Angabe f2-ki angedeutet ist. In die beiden Pufferspeicher p1, p2 werden somit während des Key-Impulses ki, der überlicherweise etwa 10 Periodendauern der FHT-Frequenz lang ist, nacheinander eine entsprechende Anzahl Digitalwerte aus dem Ausgangssignal bs des ersten Begrenzers b1 übernommen, wobei die in den zweiten Pufferspeicher p2 übernommenen Werte um die erwähnten 90 Grad gegenüber denen des ersten Pufferspeichers p1 phasenversetzte Werte sind; somit werden nie zwei Nulldurchgangswerte gleichzeitig ausgewertet.

Der jeweilige Ausgang der beiden Pufferspeicher p1, p2 liegt am Eingang des ersten bzw. des zweiten Betragsbildners bb1, bb2, deren jeweiliger Ausgang am ersten bzw. zweiten Eingang des ersten Addierers a1 liegt. Die Betragsbildner bb1, bb2 geben an ihrem Ausgang jeweils solche Digitalwerte ab, die bezüglich ihres Eingangswertes nicht mehr vorzeichenbehaftet sind, denen also beispielsweise das Vorzeichenbit fehlt. Dies bedeutet schaltungstechnisch, dass die beiden Betragsbildner bb1, bb2 einen Schaltungsteil enthalten, der aus negativen Digitalzahlen in Einer- oder Zweier-Komplementdarstellung die entsprechende positive Digitalzahl erzeugt, d. h. sie enthalten Komplement-Rückwandler.

Dem Ausgang des ersten Addierers a1 ist der zweite Begrenzer b2 nachgeschaltet, dessen Begrenzungswirkung wiederum von mindestens einer höchstwertigen Stelle des ersten Addierers a1 gesteuert ist.

Das Ausgangssignal des zweiten Begrenzers b2 ist einerseits dem Eingang des dritten Pufferspeichers p3 und andererseits dem Minuend-Eingang a des Parallel-Komparators k zugeführt, an dessen Subtrahend-Eingang b der Ausgang des dritten Pufferspeichers p3 liegt.

Hier werden auch die beiden Eingänge des Parallel-Komparators k mit Minuend-Eingang bzw.

Subtrahend-Eingang bezeichnet, was auf Grund der Überlegung für vertretbar gehalten wird, dass die von Komparatoren vorgenommene Rechenoperation rein formal der einer Differenzbildung nähersteht als der einer Summenbildung mittels eines Addierers, wenn auch die konkrete Innenschaltung von Komparatoren denen von Addierern ähnlicher ist als denen von Subtrahierern, vergleiche die entsprechenden mathematischen Operationen $a-b$, $a \gtrless b$ im Gegensatz zu $a + b$.

Der Minuend-grösser-Subrahend-Ausgang $a > b$ des Parallel-Komparators k liegt über die erste Eingangs-Ausgangs-Strecke des UND-Gatters u am Übernahmeeingang eu des dritten Pufferspeichers p3, während das zweite Taktsignal f2 dem zweiten Eingang des UND-Gatters u zugeführt ist. Der Ausgang des dritten Pufferspeichers p3 liegt auch am Eingang des vierten Pufferspeichers p4, dessen Ausgang am Subtrahend-Eingang ($-$) des Parallel-Subtrahierers sb angeschlossen ist. Dem Übernahmeeingang eu des vierten Pufferspeichers p4 ist ein aus der Rückflanke von zeilenfrequenten, jedoch mit dem Burst-Auftast-Signal ki nicht zusammenfallenden Impulsen zf abgeleitetes Signal vz zugeführt, während am Löscheingang el des dritten Pufferspeichers p3 ein aus der Rückflanke der zeilenfrequenten, jedoch mit dem Burst-Auftast-Signal ki nicht zusammenfallenden Impulse zf abgeleitetes Signal rz liegt.

In Fig. 2 ist durch die Impulsformerstufe if die Erzeugung der beiden Signale rz, vz aus den zeilenfrequenten Impulsen zf angedeutet. Der aus den beiden Pufferspeichern p3, p4, dem Parallel-Komparator k, dem UND-Gatter u und dem Impulsformer if bestehende Schaltungsteil bewirkt, dass aus dem gegebenenfalls begrenzten Ausgangssignal des ersten Addierers a1 pro Zeile des Fernsehbildes jeweils der Maximalwert der Burstamplitude ermittelt wird und an den Subtrahend-Eingang ($-$) des Parallel-Subtrahierers sb gelangt. Im wesentlichen wird dies dadurch erreicht, dass in den dritten Pufferspeicher p3 nur solche Worte des Ausgangssignals des zweiten Begrenzers b2 übernommen werden, die grösser sind als ein bereits darin vorhandenes Wort. Dieser Vorgang geschieht zeilenweise während des Key-Impulses ki.

Wie bereits erwähnt, ist die bevorzugte Ausführungsform des Akkumulators ak nach Fig. 1 im unteren Teil der Fig. 2 gezeigt. Das Ausgangssignal des Parallel-Subtrahierers sb ist dem ersten Eingang des zweiten Parallel-Addierers a2 zugeführt, dessen Ausgang über den dritten Begrenzer b3 am Eingang des fünften Pufferspeichers p5 liegt. Zur Erzielung der Aufaddier-Funktion ist der Ausgang des fünften Pufferspeichers p5 mit dem zweiten Eingang des zweiten Addierers a2 verbunden. Der Pufferspeicher p5 hat ausser dem Übernahmeeingang eu, der der Übernahmeeingang des Akkumulators ak nach Fig. 1 ist, noch die Normierdaten-Eingänge ne, über die im Bedarfsfall Normierdaten nd, also bekannte Daten, eingegeben werden können. Am Übernahmeeingang eu liegt das aus der Rückflanke des Burst-Auftast-Signals ki abgeleitete Signal rb. Mit der Rückflanke des Key-Impulses wird somit das Ausgangssignal des dritten Begrenzers b3 in den Pufferspeicher übernommen und zugleich an den Ausgang durchgeschaltet. Mit jeder Rückflanke des Key-Impulses wird somit zeilenweise das Addierergebnis aus dem von der vorhergehenden Zeile stammenden Wert und der in der gemessenen Zeile vom Parallel-Subtrahierer sb berechneten Sollwertabweichung als Stellsignal st erzeugt.

Es ist somit einleuchtend, dass sich die wesentlichen Vorteile der Erfindung bereits aus der Aufgabenlösung unmittelbar ergeben, nämlich insbesondere die zeilenweise Differenzbildung aus dem Referenzsignal rs und der maximalen Burstamplitude, die, im Akkumulator ak integriert, zum Stellsignal st des Regelkreises gemacht wird.

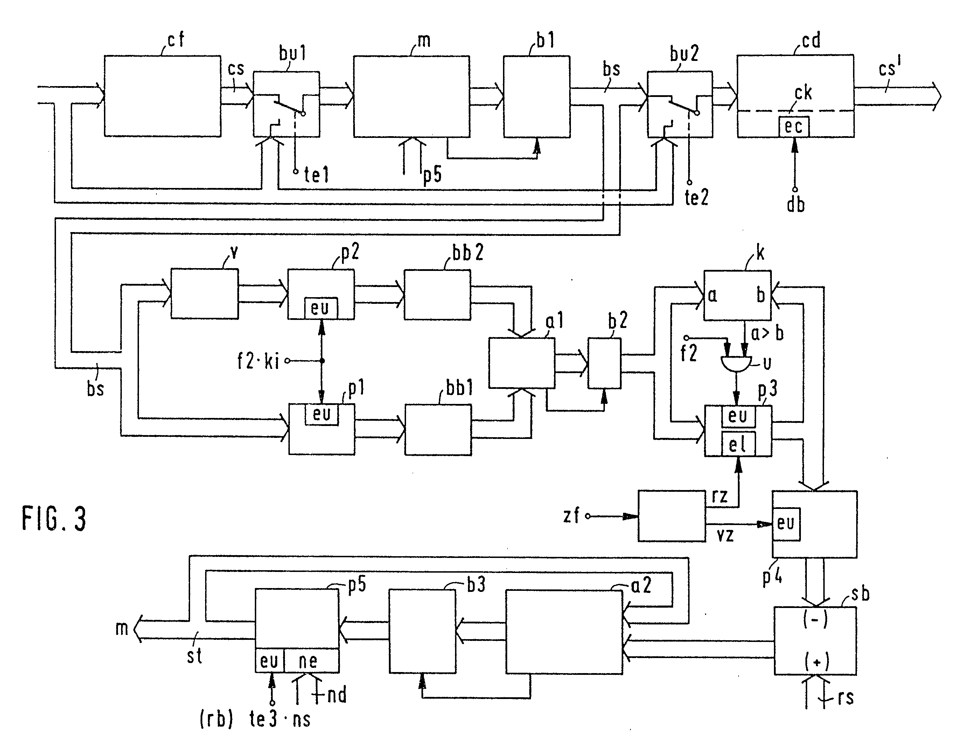

Die Fig. 3 zeigt ebenfalls blockschaltbildmässig wie die Fig. 1 und 2 eine Weiterbildung der Erfindung, die es ermöglicht, den digitalen Regelkreis nach der Herstellung der integrierten Schaltung messtechnisch zu erfassen und zugänglich zu machen. Die Messung ist zwingend erforderlich, da im Regelkreis mehrere Teilschaltungen enthalten sind und diese je für sich fehlerbehaftet sein können. Das Messverfahren und die schaltungstechnische Auslegung der Gesamtschaltung müssen daher so aufeinander abgestimmt sein, dass mit wenigem schaltungstechnischem Zusatzaufwand alle Teilschaltungen des Regelkreises messtechnisch erfasst werden können.

Hierzu ist nun nach dem Blockschaltbild der Fig. 3 vorgesehen, dass zwischen dem Ausgang des Chroma-Filters cf und dem diesem zugeordneten Eingang des Parallel-Multiplizierers m die Ruhekontakteingang-Ausgangs-Strecke des ersten Bus-Umschalters bu1 angeordnet ist, dessen Arbeitskontakteingang mit dem Eingang des Chromafilters cf verbunden ist. Zur zeichnerischen Darstellung des Bus-Umschalters bu1 ist das Schaltsymbol für einen mechanischen Umschalter gewählt, zu dessen Signaleingängen bzw. -ausgang die oben erwähnten bandartigen Verbindungsleitungen, also Busse, führen. Es ist somit klar, dass der Bus-Umschalter aus so vielen einzelnen elektronischen Umschaltern besteht, wie die erwähnten Busse Einzelleitungen haben.

In Fig. 3 ist ferner zwischen dem Ausgang des ersten Begrenzers b1 und dem Eingang des Chroma-Demodulators cd, der im übrigen auch in Fig. 1 vorhanden ist und dort das Ausgangssignal bs des ersten Begrenzers b1 zum demodulierten Chromasignal cs' „demoduliert", die Ruhekontakteingang-Ausgangs-Strecke des zweiten Bus-Umschalters bu 2 angeordnet, dessen Arbeitskontakteingang am Eingang des Chromafilters cf liegt. Der zweite Bus-Umschalter bu 2 liegt signalflussmässig hinter der Abzweigstelle, an der das Signal bs für die Burstamplituden-Messschaltung abgenommen wird. Für den konkreten schaltungstechnischen Aufbau und die zeichnerische Darstellung des zweiten Bus-Umschalters bu2 gilt das für den ersten Bus-Umschalter bu1 Gesagte sinngemäss.

Dem Steuereingang des ersten Bus-Umschalters bu1 ist das erste Test-Enable-Signal te1 und dem entsprechenden Steuereingang des zweiten Bus-Umschalters bu2 das zweite Test-Enable-Signal te2 zugeführt, das das erste Test-Enable-Signal te1 nicht überlappt. Wenn also der zweite Bus-Umschalter bu2 auf seinen Arbeitskontakt umgeschaltet ist, dann soll der erste Bus-Umschalter bu1 in Ruhestellung sein und umgekehrt.

Während des ersten Test-Enable-Signals te1 ist dem Eingang ec der Farbsperrstufe ck des Chroma-Demodulators cd ein Entsperrsignal db zugeführt, so dass beim Messen der Regelschaltung der Chroma-Demodulator cd arbeitet, obwohl nicht der bestimmungsgemässe Betrieb, sondern nur ein Testbetrieb vorliegt.

Schliesslich kann der Übernahmeeingang eu des Akkumulators ak, in Fig. 3 also der Übernahmeeingang eu des fünften Pufferspeichers p5, während eines dritten Test-Enable-Signals te3 mit einem Normiersignal ns gespeist sein. Damit wird erreicht, dass beim Testen und Messen anstatt des aus der Rückflanke des Key-Impulses abgeleiteten Signals rb, das beim bestimmungsgemässen Betrieb anliegt, das Normiersignal ns an den Übernahmeeingang eu des fünften Pufferspeichers p5 gelangt und dort bewirkt, dass die Normierdaten nd abgespeichert werden.

Zusätzlich zu den an sich vorgesehenen Anschlusspads der integrierten Schaltung, über einen Teil von denen das Ausgangssignal cs' des Chroma-Demodulators cd ausgekoppelt wird, ist ein weiterer Anschlusspad vorgesehen, über den Testergebnis-Signale einzelner Teilschaltungen zugänglich sind, d. h. ebenfalls nach ausserhalb der integrierten Schaltung weitergeleitet werden. Diese Testergebnis-Signale werden dabei zweckmässigerweise an diesen weiteren Anschlusspad über Transfer-Transistoren angekoppelt, die ihrerseits von den bereits erwähnten Test-Enable-Signalen oder entsprechenden weiteren derartigen Signalen oder auch von Signalen, die durch einfache logische Verknüpfung aus den eben erwähnten Signalen abgeleitet sind, angesteuert sind. Dadurch lässt sich erreichen, dass immer nur die gerade zu testende Teilschaltung mit dem weiteren Anschlusspad verbunden ist.

Ein zweckmässiges Testverfahren für die erfindungsgemässe Chrominanzkanal-Schaltung besteht in der folgenden zeitlichen Abfolge der einzelnen Teiltests. Als erster Teiltest wird der des Chroma-Demodulators cd vorgenommen. Dies ist erforderlich, da über den Chroma-Demodulator cd während des gesamten Testens der Chrominanzkanal-Schaltung Signale nach aussen gelangen, die durch einen fehlerhaften Chroma-Demodulator cd nicht verfälscht werden dürfen.

Zur Durchführung dieses ersten Teiltests werden das zweite Test-Enable-Signal te2 an den Steuereingang des zweiten Bus-Umschalters bu2 und das Entsperrsignal db an den Eingang ec der Farbsperrstufe ck sowie eine bekannte Datenfolge, also eine Testdaten-Folge, an den Eingang des Chromafilters cf gelegt. Die Zuführung des Entsperrsignals db an den Eingang ec der Farbsperrstufe ck ist erforderlich, da diese Sperrstufe nur im Normalbetrieb der Chrominanzkanal-Schaltung ein tatsächliches Entsperrsignal zugeführt erhält, das aus weiteren Stufen der Chrominanzkanal-Schaltung stammt, vergleiche die eingangs erwähnte Druckschrift EP-A1-0051075.

Durch das Anlegen des zweiten Test-Enable-Signals te2 an den zweiten Bus-Umschalter bu2 gelangen die Eingangssignale des Chromafilters cf direkt an den Eingang des Chroma-Demodulators cd, so dass bei bekannter Testdaten-Folge dessen Funktion anhand der Ausgangssignale überprüfbar ist.

Als zweiter Teiltest ist der des Parallel-Multiplizierers m vorzunehmen. Dazu werden das erste Test-Enable-Signal te1 an den Steuereingang des ersten Bus-Umschalters bu1, das dritte Test-Enable-Signal te3 und das Normiersignal ns an den Übernahmeeingang des Akkumulators ak, also beispielsweise an den Übernahmeeingang des fünften Pufferspeichers p5, die Normierdaten nd an dessen Normierdaten-Eingang ne und eine bekannte Datenfolge, also wiederum eine Testdaten-Folge, an den Eingang des Chromafilters cf gelegt.

Durch das erste Test-Enable-Signal te1 wird erreicht, dass wiederum wie beim ersten Test das Chromafilter cf von der Testdaten-Folge umgangen wird und somit die Testdaten direkt an den einen Eingang des Parallel-Multiplizierers m gelangen. Diese Umgehung des Chromafilters cf ist erforderlich, da es sich bei dieser Teilschaltung im allgemeinen um eine dynamische Teilschaltung handelt, die schon aus diesem Grunde sich nicht für die Einbeziehung in die einzelnen Tests eignet.

Durch das Eingeben der Normierdaten in den Akkumulator ak bzw. dessen fünften Pufferspeicher p5 als Teilschaltung wird erreicht, dass am zweiten Eingang des Parallel-Multiplizierers m ebenfalls vorbekannte Daten anliegen, so dass dessen Ausgangssignal vorherbestimmbar und somit die Multipliziererfunktion überprüfbar ist. Da im ersten Testschritt der Chroma-Demodulator cd bereits auf richtige Funktion getestet wurde, sind die an seinem Ausgang während des zweiten Testschritts auftretenden Daten bei festgestellter richtiger Funktion des Chroma-Demodulators cd die unverfälschten Ausgangsdaten des Parallel-Multiplizierers m.

Als weitere Teiltests können nun die der Betragsbildner bb1, bb2, des ersten Addierers a1 und des Parallelkomparators k durchgeführt werden. Dazu werden das erste Test-Enable-Signal te1 an den Steuereingang des ersten Bus-Umschalters bu1 und bekannte Datenfolgen an den Eingang des Chromafilters cf gelegt, wobei die Einzeltest-Ergebnisse über den erwähnten weiteren Anschlusspad zugänglich sind, wobei diese im allgemeinen im Sinne einer Gut-Schlecht-Feststellung vorliegen.

Als letzter Teiltest ist schliesslich der des Akkumulators ak durchzuführen. Hierzu werden das erste Test-Enable-Signal te1 an den Steuereingang des ersten Bus-Umschalters bu1, das dritte Test-Enable-Signal te3 und das Normiersignal ns an den Übernahmeeingang des Akkumulators ak, also beispielsweise an den entsprechenden Eingang des fünften Pufferspeichers p5, ein Auslösesignal an den zweiten Begrenzer b2 und bekannte Datenfolgen an den Minuend-Eingang (+) des Parallel-Subtrahierers sb gelegt. Durch das Auslösesignal des zweiten Begrenzers b2 wird erreicht, dass das eine Eingangssignal des Akkumulators dadurch fest vorgegeben und somit bekannt ist, dass die Ausgangsdaten des Subtrahierers sb ebenfalls bekannt sind. Durch Veränderung der Referenzdaten rs lässt sich somit der Akkumulator ak testen.

Die Referenzdaten rs sowie die erwähnten verschiedenen Testdaten-Folgen können aus einem Mikroprozessor stammen, ebenso die Normierdaten nd.

**Patentansprüche**

1. Integrierte digitale Chrominanzkanal-Schaltung mit Verstärkungsregelung für Farbfernsehempfänger mit mindestens einer integrierten Schaltung zur digitalen Verarbeitung des Farb-Bild-Austast-Synchronsignal-Gemisches (FBAS-Signals), wobei
— das am Ausgang eines digitalen Chromafilters (cf) auftretende digitale Chrominanzsignal (cs) dem ersten Eingang eines Parallel-Multiplizierers (m) und seinem zweiten Eingang das digitale Stellsignal (st) der Verstärkungsregelung zugeführt sind,
— der Ausgang des Parallel-Multiplizierers am Eingang eines digitalen Chroma-Demodulators (cd) mit Farbsperrstufe (ck) und am Eingang einer Burstamplituden-Messstufe (bm) liegt, deren Ausgangssignal in einer Regelstufe mit einem Referenzsignal (rs) verglichen wird,
— das Ausgangssignal der Regelstufe ein Integrierglied durchläuft, dessen Ausgangssignal das Stellsignal (st) ist, und
— ein Rechtecksignal-Taktgenerator als Farbhilfsträger-Quarzoszillator (FHT-Oszillator) (os) mindestens ein erstes Taktsignal (f1) mit der vierfachen FHT-Frequenz und ein zweites Taktsignal (f2) mit der FHT-Frequenz abgibt, gekennzeichnet durch folgende Merkmale:
— zwischen Parallel-Multiplizierer (m) und Burstamplituden-Messstufe (bm) ist ein erster Begrenzer (b1) eingefügt,
— die Regelstufe ist ein Parallel-Subtrahierer (sb), dessen Minuend-Eingang (+) das Referenzsignal (rs) zugeführt ist und dessen Subtrahend-Eingang (−) am Ausgang der Burstamplituden-Messstufe (bm) liegt, und
— das Integrierglied ist ein digitaler Akkumulator (ak), dessen Übernahmeeingang (eu) ein aus der Rückflanke des Burst-Auftast-Signals (Key-Impuls) (ki) abgeleitetes Signal (rb) zugeführt ist (Fig. 1).

2. Chrominanzkanal-Schaltung nach Anspruch 1, gekennzeichnet durch folgende Merkmale:

— das Ausgangssignal (bs) des ersten Begrenzers (b1) ist dem Eingang eines ersten Pufferspeichers (p1) und über ein Verzögerungsglied (v), dessen Verzögerungszeit gleich der Periodendauer des ersten Taktsignals (f1) ist, dem Eingang eines zweiten Pufferspeichers (p2) zugeführt, wobei der jeweilige Übernahmeeingang (eu) der beiden Pufferspeicher (p1, p2) während des Burst-Auftast-Signals (ki) mit dem zweiten Taktsignal (f2) gespeist ist,

— das Ausgangssignal des ersten Pufferspeichers (p1) bzw. das des zweiten Pufferspeichers (p2) ist jeweils einem ersten bzw. einem zweiten Betragsbildner (bb1, bb2) zugeführt, dessen jeweiliger Ausgang mit dem ersten bzw. dem zweiten Eingang eines ersten Parallel-Addierers (a1) verbunden ist,

— der Ausgang des ersten Parallel-Addierers (a1) liegt über einen zweiten Begrenzer (b2) am Eingang eines dritten Pufferspeichers (p3) und am Minuend-Eingang (a) eines Parallel-Komparators (k), dessen Minuend-grösser-Subtrahend-Ausgang (a > b) über die erste Eingangs-Ausgangs-Strecke eines UND-Gatters (u) mit dem Übernahmeeingang (eu) des dritten Pufferspeichers (p3) verbunden ist, wobei dem zweiten Eingang des UND-Gatters (u) das zweite Taktsignal (f2) zugeführt ist und der Ausgang des dritten Pufferspeichers (p3) am Subtrahend-Eingang (b) des Parallel-Komparators (k) liegt,

— der Ausgang des dritten Pufferspeichers (p3) liegt am Eingang eines vierten Pufferspeichers (p4), dessen Ausgang am Subtrahend-Eingang (−) des Parallel-Subtrahierers (sb) liegt und dessen Übernahmeeingang (eu) ein aus der Vorderflanke von zeilenfrequenten, jedoch mit dem Burst-Auftast-Signal (ki) nicht zusammenfallenden Impulsen (zf) abgeleitetes Signal (vz) zugeführt sind, und

— dem Löscheingang (el) des dritten Pufferspeichers (p3) ist ein aus der Rückflanke der mit dem Burst-Auftast-Signal (ki) nicht zusammenfallenden Impulse (zf) abgeleitetes Signal (rz) zugeführt (Fig. 2).

3. Chrominanzkanal-Schaltung nach Anspruch 1 oder 2, dadurch gekennzeichnet, dass das Ausgangssignal des Parallel-Subtrahierers (sb) dem ersten Eingang eines zweiten Parallel-Addierers (a2) zugeführt ist, dessen Ausgang über einen dritten Begrenzer (b3) am Eingang eines fünften Pufferspeichers (p5) liegt, dessen Ausgang mit dem zweiten Eingang des zweiten Parallel-Addierers (a2) verbunden ist und der Normierdaten-Eingänge (ne) sowie den Übernahmeeingang (eu) des Akkumulators (ak) aufweist (Fig. 2).

4. Chrominanzkanal-Schaltung nach einem der Ansprüche 1 bis 3, gekennzeichnet durch folgende Merkmale:

— zwischen dem Ausgang des Chromafilters (cf) und dem diesem zugeordneten Eingang des Parallel-Multiplizierers (m) ist die Ruhekontakteingang-Ausgangs-Strecke eines ersten Bus-Umschalters (bu1) angeordnet, dessen Arbeitskontakteingang mit dem Eingang des Chromafilters (cf) verbunden ist,

— zwischen dem Ausgang des ersten Begrenzers (b1) und dem Eingang des Chroma-Demodulators (cd) ist die Ruhekontakteingang-Ausgangs-Strecke eines zweiten Bus-Umschalters (bu2) angeordnet, dessen Arbeitskontakteingang am Eingang des Chromafilters (cf) liegt,

— dem Steuereingang des ersten Bus-Umschalters (bu1) ist ein erstes Test-Enable-Signal (te1) und dem Steuereingang des zweiten Bus-Umschalters (bu2) ein zweites Test-Enable-Signal (te2) zugeführt, das das erste Test-Enable-Signal (te1) nicht überlappt,

— dem Eingang (ec) der Farbsperrstufe (ck) ist während des zweiten Test-Enable-Signals (te2) ein Entsperrsignal (db) zugeführt,

— dem Übernahmeeingang (eu) des fünften Pufferspeichers (p5) ist während eines dritten Test-Enable-Signals (te3) ein Normiersignal (ns) zuführt, und

— es ist zusätzlich zu den an sich vorgesehenen Anschlusspads ein weiterer Anschlusspad vorhanden, über den Testergebnis-Signale einzelner Teilschaltungen zugänglich sind (Fig. 3).

5. Testverfahren für eine Chrominanzkanal-Schaltung nach einem der Ansprüche 1 bis 4, gekennzeichnet durch folgende Merkmale:

— als erster Teiltest wird der des Chroma-Demodulators (cd) dadurch vorgenommen, dass das zweite Test-Enable-Signal (te2) an den Steuereingang des zweiten Bus-Umschalters (bu2) und das Entsperrsignal (db) an den Eingang (ec) der Farbsperrstufe (ck) sowie eine bekannte Datenfolge an den Eingang des Chromafilters (cf) gelegt werden,

— als zweiter Teiltest wird der des Parallel-Multiplizierers (m) dadurch vorgenommen, dass das erste Test-Enable-Signal (te1) an den Steuereingang des ersten Bus-Umschalters (bu1), das dritte Test-Enable-Signal (te3) und das Normiersignal (ns) an den Übernahmeeingang des Akkumulators (ak), die Normierdaten (nd) an dessen Normierdaten-Eingang (ne) und eine bekannte Datenfolge an den Eingang des Chromafilters (cf) gelegt werden,

— als weitere Teiltests werden die der Betragsbildner (bb1, bb2), des ersten Addierers (a1) und des Parallelkomparators (k) dadurch vorgenommen, dass das erste Test-Enable-Signal (te1) an den Steuereingang des ersten Bus-Umschalters (bu1) und bekannte Datenfolgen an den Eingang des Chromafilters (cf) gelegt werden, und

— als letzter Teiltest wird der des Akkumulators (ak) dadurch vorgenommen, dass das erste Test-Enable-Signal (te1) an den Steuereingang des ersten Bus-Umschalters (bu1), das dritte Test-Enable-Signal (te3) und das Normiersignal (ns) an den Übernahmeeingang des Akkumulators (ak), die Normierdaten (nd) an dessen Normierdaten-Eingang (ne), ein Auslöse-Signal an den zweiten Begrenzer (b2) und bekannte Datenfolgen an den Minuend-Eingang (+) des Parallel-Subtrahierers (sb) gelegt werden.

## Claims

1. Digital integrated chrominance-channel circuit with gain control for color-television receivers, comprising at least one integrated circuit for digitally processing the composite color signal,
— wherein the digital chrominance signal (cs) appearing at the output of the digital chroma filter (cf) is applied to the first input of a parallel multiplier (m), and the digital gain control signal (st) is applied to the second input of this parallel multiplier (m);
— wherein the output of the parallel multiplier is connected to the input of a digital chroma demodulator (cd) with a color killer stage (ck) and to the input of a burst-amplitude-measuring stage (bm) whose output signal is compared with a reference signal (rs) in a control stage;
— wherein the output signal of the control stage passes through an integrator whose output signal is the gain control signal (st), and
— wherein a square-wave clock generator used as a chrominance subcarrier oscillator (os) generates at least a first clock signal (f1), whose frequency is four times that of the chrominance subcarrier, and a second clock signal (f2), whose frequency is equal to that of the chrominance subcarrier,
characterized by the following features:
— a first limiter (b1) is inserted between the parallel multiplier (m) and the burst-amplitude-measuring stage (bm);
— the control stage is a parallel subtracter (sb) whose minuend input (+) is presented with the reference signal (fs), and whose subtrahend input (−) is connected to the output of the burst-amplitude-measuring stage (bm), and
— the integrator is a digital accumulator (ak) whose enable input (eu) is fed with a signal (rb) derived from the trailing edge of the burst gating signal (keying pulse) (ki).

2. A chrominance-channel circuit as claimed in Claim 1, characterized by the following features:
— the output signal (bs) from the first limiter (b1) is applied to the input of a first buffer memory (p1) and, through a delay element (v) which provides a delay equal to the period of the first clock signal (f1), to the input of a second buffer memory (p2), the second clock signal (f2) being applied to the enable inputs (eu) of the two buffer memories (p1, p2) during the burst gating signal (ki);
— the output signals from the first buffer memory (p1) and the second buffer memory (p2) are fed, respectively, to a first absolute-value former (bb1) and a second absolute-value former (bb2) which have their outputs connected to the first and the second input, respectively, of a first parallel adder (a1);
— the output of the first parallel adder (a1) is connected via a second limiter (b2) to the input of a third buffer memory (p3) and to the minuend input (a) of a parallel comparator (k) whose minuend-greater-than-subtrahend output (a > b) is coupled to the enable input (eu) of the third buffer memory (p3) through the first input-output path of an AND gate (u) whose second input is fed with the second clock signal (f2), and the output of the third buffer memory (p3) is coupled to the subtrahend input (b) of the parallel comparator (k);
— the output of the third buffer memory (p3) is connected to the input of a fourth buffer memory (p4) whose output is coupled to the subtrahend input (−) of the parallel subtracter (sb), and whose enable input (eu) is fed with a signal (vz) derived from the leading edges of horizontal-frequency pulses (zf) not coinciding with the burst ·gating signal (ki), and
— the clear input (el) of the third buffer memory (p3) is fed with a signal (rz) derived from the trailing edges of the pulses (zf) not coinciding with the burst gating signal (ki).

3. A chrominance-channel circuit as claimed in Claim 1 or 2, characterized in that the output signal from the parallel subtracter (sb) is applied to the first input of a second parallel adder (a2) having its output connected via a third limiter (b3) to the input of a fifth buffer memory (p5) whose output is coupled to the second input of the second parallel adder (a2), and which has normalizing-data inputs (ne) and the enable input (eu) of the accumulator (ak).

4. A chrominance-channel circuit as claimed in any one of Claims 1 to 3, characterized by the following features:
— inserted between the output of the chroma filter (cf) and the associated input of the parallel multiplier (m) is the path from the break-contact input to the output of a first bus switch (bu1) whose make-contact input is connected to the input of the chroma filter (cf);
— inserted between the output of the first limiter (b1) and the input of the chroma demodulator (cd) is the path from the break-contact input to the output of a second bus switch (bu2) whose make contact input is connected to the input of the chroma filter (cf);
— a first test enable signal (te1) and a second test enable signal (te2), which does not overlap the first test enable signal (te1), are applied to the control input of the first bus switch (bu1) and to the control input of the second bus switch (bu2), respectively;
— an actuating signal (db) is applied to the input (ec) of the color killer stage (ck) during the second test enable signal (te2);
— a normalizing signal (ns) is applied to the enable input (eu) of the fifth buffer memory (p5) during a third test enable signal (te3), and
— in addition to the usual contact pads, there is a contact pad via which the test-result signals of the individual subcircuits are accessible.

5. Method of testing a chrominance-channel circuit as claimed in any one of Claims 1 to 4, characterized by the following features:
— in a first step, the chroma demodulator (cd) is tested by applying the second test enable signal (te2) to the control input of the second bus switch (bu2), the actuating signal (dt) to the input (ec) of the color killer stage (ck), and a known data sequence to the input of the chroma filter (cf) ;

— in a second step, the parallel multiplier (m) is tested by applying the first test enable signal (te1) to the control input of the first bus switch (bu1), the third test enable signal (te3) and the normalizing signal (ns) to the enable input of the accumulator (ak), the normalizing data (nd) to the normalizing-data input (ne) of the accumulator (ak), and a known data sequence to the input of the chroma filter (cf) ;

— in further steps, the absolute-value formers (bb1, bb2), the first adder (a1), and the parallel comparator (k) are tested by applying the first test enable signal (te1) to the control input of the first bus switch (bu1), and known data sequences to the input of the chroma filter (cf1), and

— in the last step, the accumulator (ak) is tested by applying the first test enable signal (te1) to the control input of the first bus switch (bu1), the third test enable signal (te3) and the normalizing signal (ns) to the enable input of the accumulator (ak), the normalizing data (nd) to the normalizing-data input (ne) of the accumulator (ak), a trigger signal to the second limiter (b2), and known data sequences to the minuend input (+) of the parallel subtracter (sb).


**Revendications**

1. Circuit intégré numérique de canal de chrominance avec régulation de l'amplification pour récepteurs de télévision en couleurs avec au moins un circuit intégré pour le traitement numérique du signal composite «couleur-image-suppression-synchronisation» (signal FBAS), où le signal de chrominance (cs) engendré à la sortie d'un filtre de chrominance numérique (cf) est fourni à la première entrée d'un multiplicateur parallèle (m), dont la seconde entrée reçoit le signal numérique de commande (st) pour le réglage de l'amplification, où la sortie du multiplicateur parallèle (m) est transmise à l'entrée d'un démodulateur de chrominance numérique (cd) avec un étage de suppression couleurs (ck) et à l'entrée d'un étage de mesure de l'amplitude de la salve de référence (bm) dont le signal de sortie est comparé dans un étage de régulation à un signal de référence (rs), où le signal de sortie de l'étage de régulation traverse un étage intégrateur dont le signal de sortie est le signal de commande (st), et où un générateur de signaux carrés de synchronisation sous la forme d'un oscillateur à quartz de sous-porteuse couleurs (oscillateur FHT) (os) fournit au moins un premier signal de synchronisation (f1) à une fréquence égale à quatre fois celle de la sous-porteuse (FHT) et un second signal de synchronisation (f2) à la fréquence FHZ, caractérisé en ce que, entre le multiplicateur parallèle (m) et l'étage de mesure de l'amplitude de salve de référence (bm) se trouve inséré un premier limiteur (b1), en ce que l'étage de régulation est un soustracteur parallèle (sb) dont l'entrée de terme principal (+) reçoit le signal de référence (rs) et dont l'entrée de terme à soustraire (−) est reliée à la sortie de l'étage de mesure de l'amplitude de la salve de référence (bm), et en ce que le circuit intégrateur est un accumulateur numérique (ak) dont l'entrée de validation (eu) reçoit un signal (rb) dérivé du flanc arrière du signal de commutation de la salve de référence (ki) (fig. 1).

2. Circuit de canal de chrominance selon la revendication 1, caractérisé en ce que le signal de sortie (bs) du premier limiteur (b1) est injecté à l'entrée d'une première mémoire tampon (p1) ainsi que, via un circuit à retard (v) dont le retard est égal à la période du premier signal de synchronisation (f1), à l'entrée d'une seconde mémoire tampon (p2), les entrées de validation (eu) des deux mémoires tampons (p1, p2) étant alimentées par le second signal de synchronisation (f2) pendant le signal de commutation de la salve de référence (ki), en ce que les signaux de sortie de la première mémoire tampon (p1) et de la seconde mémoire tampon (p2) sont fournis à un premier et à un second circuit de formation de la valeur absolue (bb1, bb2) dont les sorties respectives sont reliées à la première et à la seconde entrée d'un premier additionneur parallèle (a1), en ce que la sortie du premier additionneur parallèle (a1) est reliée via un second limiteur (b2) à l'entrée d'une troisième mémoire tampon (p3) et à l'entrée de terme principal (a) d'un comparateur parallèle (k), dont la sortie «terme principal supérieur à terme soustractif» (a > b) est reliée via la première voie entrée-sortie d'une porte ET (u) à l'entrée de validation (eu) de la troisième mémoire tampon (p3), la seconde entrée de la porte ET (u) recevant le second signal de synchronisation (f2) et la sortie de la troisième mémoire tampon (p3) étant reliée à l'entrée de terme à soustraire (b) du comparateur parallèle (k), en ce que la sortie de la troisième mémoire tampon (p3) est reliée à l'entrée d'une quatrième mémoire tampon (p4) dont la sortie est couplée à l'entrée de terme à soustraire (−) du soustracteur parallèle (sb) et dont l'entrée de validation (eu) reçoit un signal (vz) dérivé du flanc avant d'impulsion (zf) à la fréquence lignes mais ne coïncidant pas avec le signal de commutation de la salve de référence (ki), et en ce que l'entrée d'effacement (el) de la troisième mémoire tampon (p3) reçoit un signal (rz) dérivé du flanc avant d'impulsions (zf) à la fréquence de ligne ne coïncidant pas avec le signal de commutation de la salve de référence (ki) (fig. 2).

3. Circuit de canal de chrominance selon la revendication 1 ou 2, caractérisé en ce que le signal de sortie du soustracteur parallèle (sb) est transmis à la première entrée d'un second additionneur parallèle (a2) dont la sortie est couplée via un troisième limiteur (b3) à l'entrée d'une cinquième mémoire tampon (p5) dont la sortie est reliée à la seconde entrée du second additionneur parallèle (a2) et qui possède des entrées de données normalisées (ne) et l'entrée de validation (eu) de l'accumulateur (ak) (fig. 2).

4. Circuit de canal de chrominance selon l'une des revendications 1 à 3, caractérisé en ce que, entre la sortie du filtre de chrominance (cf) et l'entrée correspondante du multiplicateur parallèle (m), se trouve insérée la voie entrée-sortie à contact de repos d'un premier commutateur de bus (bu1) dont l'entrée à contact de travail est reliée avec l'entrée du filtre de chrominance (cf), en ce que, entre la sortie du premier limiteur (b1) et l'entrée du démodulateur de chrominance (cd), est insérée la voie entrée-sortie à contact de repos d'un second commutateur de bus (bu2) dont l'entrée à contact de travail est reliée à l'entrée du filtre de chrominance (cf), en ce que l'entrée de commande du premier commutateur de bus (bu1) reçoit un premier signal de validation de test (te1) et l'entrée de commande du second commutateur de bus (bu2) un second signal de validation de test (te2) ne recouvrant pas le premier signal de validation de test (te1), en ce que l'entrée (ec) de l'étage de suppression de couleurs (ck) reçoit un signal de déverrouillage (db) pendant le second signal de validation de test (te2), en ce que l'entrée de validation (eu) de la cinquième mémoire tampon (p5) reçoit un signal de normalisation (ns) pendant un troisième signal de validation de test (te3) et en ce qu'il est prévu en plus de la voie de raccordement déjà prévue une seconde voie de raccordement sur laquelle sont accessibles les signaux des résultats des tests des différents éléments de circuits (fig. 3).

5. Méthode de test pour un circuit de canal de chrominance selon l'une des revendications 1 à 4, caractérisée en ce que le premier test partiel réalisé est celui du démodulateur de chrominance (cd), pour lequel on injecte le second signal de validation de test (te2) à l'entrée de commande du second commutateur de bus (bu2), le signal de déverrouillage (db) à l'entrée (ec) de l'étage de suppression de couleurs (ck) et une séquence de données connue à l'entrée du filtre de chrominance (cf), en ce que le second test réalisé est celui du démultiplicateur parallèle (m), pour lequel on injecte le premier signal de validation de test (te1) à l'entrée de commande du premier commutateur de bus (bu1), le troisième signal de validation de test (te3) et le signal normalisé (ns) à l'entrée de validation de l'accumulateur (ak), les données normalisées (nd) à son entrée de données normalisées (ne) et une séquence de données connue à l'entrée du filtre de chrominance (cf), en ce que les tests suivants sont ceux des circuits de formation de valeur absolue (bb1, bb2), du premier additionneur (a1) et du comparateur parallèle (k), pour lesquels on injecte le premier signal de validation de test (te1) à l'entrée de commande du premier commutateur de bus (bu1) et des séquences de données connues à l'entrée du filtre de chrominance (cf), et en ce que le dernier test réalisé est celui de l'accumulateur (ak), pour lequel on injecte le premier signal de validation de test (te1) à l'entrée de commande du premier commutateur de bus (bu1), le troisième signal de validation de test (te3) et le signal de normalisation (ns) à l'entrée de validation de l'accumulateur (ak), les données normalisées (nd) à son entrée de données normalisées (ne), un signal de déclenchement au second limiteur (b2) et des séquences de données connues à l'entrée de terme principal (+) du soustracteur parallèle (sb).

FIG.1

0 095 543

FIG. 2

FIG. 3